# EUROPEAN PATENT APPLICATION

(11) **EP 2 424 249 A2**
(43) Date of publication of application: **29.02.2012**
(21) Application number: 11157017.2
(22) Date of filing: 04.03.2011
(51) Int. Cl.: H04N 9/31

(54) **Image display device and information processing device including the same**

(30) Priority: 31.08.2010 JP 2010193258; 31.08.2010 JP 2010193259
(71) Applicant: Panasonic Corporation, Kadoma-shi Osaka 571-8501 (JP)
(72) Inventor: Enomoto, Hirofumi, Osaka-shi, Osaka 540-6207 (JP); Mutoh, Junichi, Osaka-shi, Osaka 540-6207 (JP); Mizushima, Tetsuro, Osaka-shi, Osaka 540-6207 (JP); Nakayama, Kenji, Osaka-shi, Osaka 540-6207 (JP)
(74) Representative: Eisenführ, Speiser & Partner

(57) **Abstract**

An image display device using a semiconductor laser as a light source, includes a green laser light source device that converts a wavelength of infrared laser light and outputs green laser light; a spatial light modulator that modulates the green laser light input from the green laser light source device based on an image signal; an optical element that is provided in a path between the green laser light source device and the spatial light modulator, and reflects the green laser light to direct it to the spatial light modulator; an optical element support device that supports the optical element; and a case to which the green laser light source device, the spatial light modulator and the optical element support device are attached. The optical element support device rotates about at least one rotation axis in a state of holding the optical element to displace an optical axis of the green laser light.

## Description

### CROSS-REFERENCE TO RELATED APPLICATIONS

The present application claims priority under 35 U.S.C. § 119 of Japanese Application Nos. 2010-193258 and 2010-193259, both filed on August 31, 2010, the disclosure of which is expressly incorporated by reference herein in its entirety.

### BACKGROUND OF THE INVENTION

### 1. Field of the Invention

The present invention relates to an image display device having a laser light source device in which a semiconductor laser is used as a light source, and an information processing device having the image display device.

### 2. Description of Related Art

Recently, a technology is known in which a semiconductor laser is used as a light source of an image display device. The semiconductor laser has a variety of advantages, compared with a mercury lump, which have been conventionally and widely used in the image display device. The advantages include, for example, good color reproducibility, instant lighting-up, a long service life, high efficiency and reduction in power consumption, ease in downsizing, and so on.

The image display device using the semiconductor laser is known in which three colors of laser light of red, blue and green, emitted from three laser light sources having semiconductor lasers, are incident on a display area of a reflective liquid crystal panel, and image light of each color output from the reflective liquid crystal panel is projected on an external screen via a projection lens (Japanese Patent Application Publication No. 2007-316393 (JP-A-2007-316393)).

Further, since a semiconductor laser that directly outputs high power green laser light does not exist, green laser light may be obtained as follows. A semiconductor laser outputs laser light for excitation; the laser light for excitation excites a laser medium to output infrared laser light; and the wavelength of the infrared laser light is converted to output green laser light by a wavelength conversion element (Japanese Patent Application Publication No. 2008-16833 (JP-A-2008-16833)).

However, the image display device as described in JP-A-2007-316393 requires the following conditions to maintain a good image quality of an image displayed on a screen. That is, the optical axis (laser light path) of the light output from each laser light source device should be adjusted with a high accuracy, such that laser light is incident on an appropriate position in an incident area of a spatial light modulator (i.e., the reflective liquid crystal panel). Accordingly, it is preferable to provide each laser light source device such that the attachment position of each laser light source device with respect to a case of the image display device (i.e., optical axis of output light) is adjustable at least in two axial directions.

However, the green laser light source device has a configuration as described in JP-A-2008-16833, which is more complicated than those of the red and blue light source devices. Therefore, when the green laser light source device is attached to the case of the image display device adjustably in two axial directions, the attachment structure may be complicated. Furthermore, such a complicated attachment structure may increase a mounting space of the green laser light source device, cause an interference between the green laser light source device and the other laser light source device, and impede downsizing of the image display device.

### SUMMARY OF THE INVENTION

In view the above circumstances, an image display device is provided in which an optical axis of green laser light is easily adjustable without adjusting an attachment position of a green laser light source device, or with a very simple adjustment of the attachment position of the green laser light source device. An information processing device having the image display device is also provided.

In view of the above circumstances, an aspect of the present invention provides an image display device using a semiconductor laser as a light source, including a green laser light source device that converts a wavelength of infrared laser light and outputs green laser light; a spatial light modulator that modulates the green laser light input from the green laser light source device based on an image signal; an optical element that is provided in a path between the green laser light source device and the spatial light modulator, and reflects the green laser light to direct the green laser light to the spatial light modulator; an optical element support device that supports the optical element; and a case to which the green laser light source device, the spatial light modulator and the optical element support device are attached. The optical element support device rotates about at least one rotation axis in a state of holding the optical element to displace the optical axis of the green laser light.

According to the features of the present invention, an image display device is provided in which an optical axis of green laser light is adjustable, without requiring adjustment of an attachment position of the green laser light source device. An information processing device including the image display device is also provided.

According to the features of the present invention, an image display device is provided in which an optical axis of green laser light is adjustable, with a simple operation, and without employing a complicated attachment structure of a green laser light source device. An information processing device including the image display device is also provided.

According to the features of the present invention, an optical axis of green laser light is easily adjustable in a direction in parallel with a surface on which an optical element support device is attached, of the surfaces of the case.

According to the features of the present invention, a green optical axis is adjustable in directions perpendicular to and in parallel with a surface on which an optical element support device is attached, without requiring adjustment of the attachment position of a green laser light source device.

According to the features of the present invention, an optical axis of green laser light is adjustable, while reducing an influence of heat generated by a green laser light source device on the surrounding area.

According to the features of the present invention, an image display device is provided having a laser source device using a semiconductor laser as a light source, in which an optical axis of green laser light is easily adjustable, without requiring adjustment of an attachment position of a green laser light source device, or with a very simple adjustment thereof.

### BRIEF DESCRIPTION OF THE DRAWINGS

The present invention is further described in the detailed description which follows, in reference to the noted plurality of drawings by way of non-limiting examples of exemplary embodiments of the present invention, in which like reference numerals represent similar parts throughout the several views of the drawings, and wherein:
Fig. 1 is a schematic configuration diagram of an image display device according to a first embodiment of the present invention;
Fig. 2 is a perspective view of the image display device according to the first embodiment;
Fig. 3 is an exploded perspective view of the image display device shown in Fig. 2;
Fig. 4 is a schematic view illustrating a state of laser light in a green laser light source device according to the first embodiment;
Fig. 5 is a perspective view illustrating the vicinity of the green laser light source device in the image display device according to the first embodiment;
Fig. 6 is a perspective view of a mirror support device according to the first embodiment;
Fig. 7 is an exploded perspective view of the mirror support device shown in Fig. 6;
Fig. 8 is a plan view illustrating an optical axis adjusting method of green laser light by the mirror support device according to the first embodiment;
Fig. 9 is a perspective view illustrating the optical axis adjusting method of green laser light by the mirror support device according to the first embodiment;
Fig. 10 is an explanatory diagram illustrating a change in a projection position of green laser light on a screen, caused by the optical axis adjustment of green laser light according to the first embodiment;
Fig. 11 is a perspective view illustrating an example of a notebook-type information processing device in which the image display device according to the first embodiment is provided;
Fig. 12 is a perspective view illustrating an attachment structure of the green laser light source device of the image display device according to a second embodiment;
Fig. 13 is a perspective view of the mirror support device according to the second embodiment; and
Fig. 14 is an exploded perspective view of the mirror support device shown in Fig. 13.

### DETAILED DESCRIPTION OF THE INVENTION

The particulars shown herein are by way of example and for purposes of illustrative discussion of the embodiments of the present invention only and are presented in the cause of providing what is believed to be the most useful and readily understood description of the principles and conceptual aspects of the present invention. In this regard, no attempt is made to show structural details of the present invention in more detail than is necessary for the fundamental understanding of the present invention, the description is taken with the drawings making apparent to those skilled in the art how the forms of the present invention may be embodied in practice.

The embodiments of the present invention will be described hereinafter with reference to the drawings.

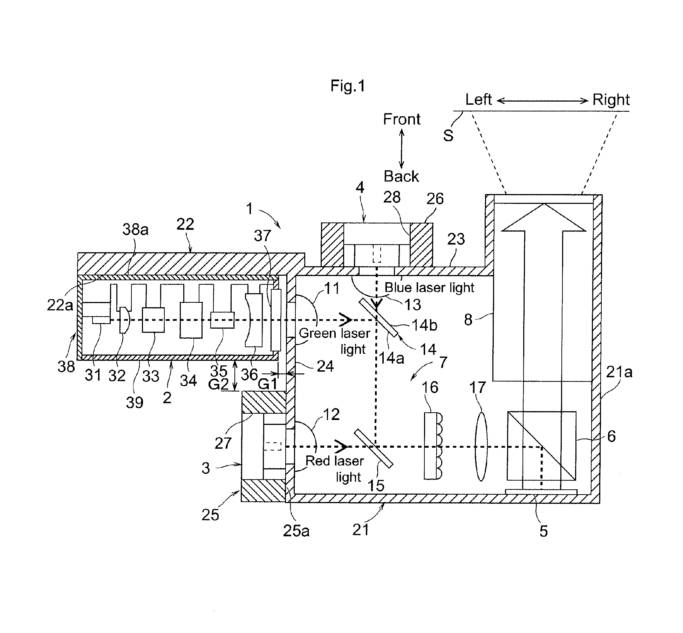

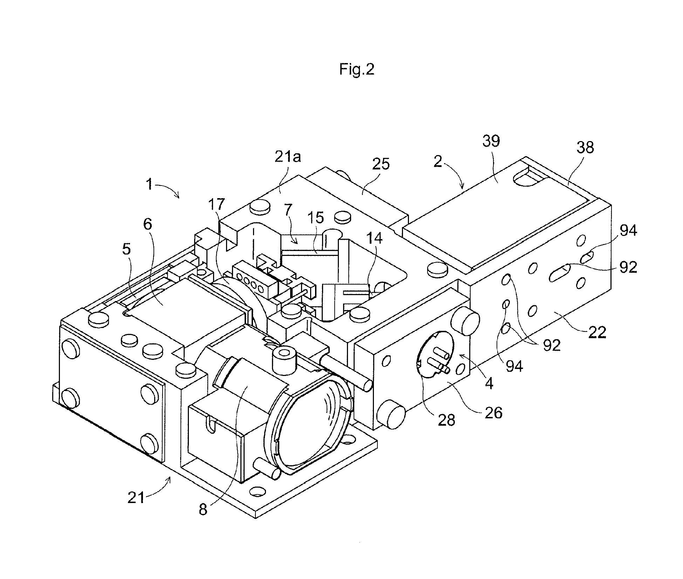

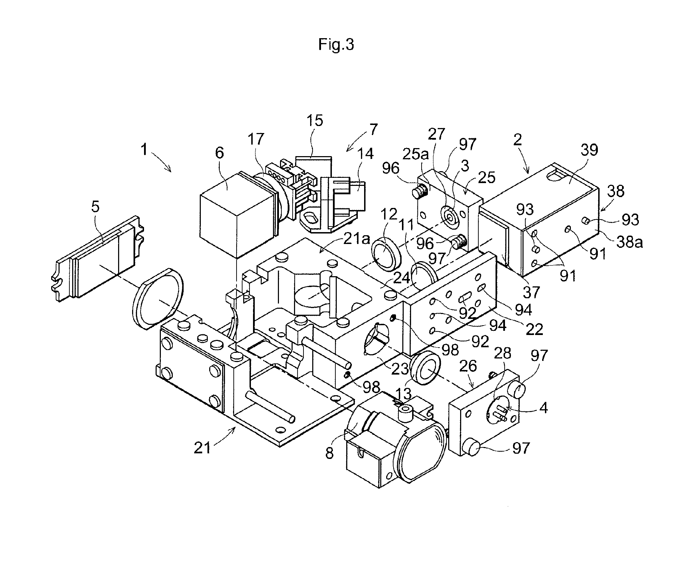

Fig. 1 is a schematic configuration diagram illustrating an image display device 1 according to a first embodiment of the present invention. Figs. 2 and 3 are a perspective view and an exploded perspective view of the image display device 1. The image display device 1 projects and displays a desired image on a screen S. The image display device 1 includes a green laser light source device 2 that outputs green laser light, a red laser light source device 3 that outputs red laser light, a blue laser light source device 4 that outputs blue laser light, a reflective liquid crystal spatial light modulator 5 that spatially modulates the laser light output from each of the laser light source devices 2-4 according to image signals, and forms an image, a polarizing beam splitter 6 that reflects the laser light output from each of the laser light source devices 2-4 to illuminate the spatial light modulator 5, and transmits modulated laser light output from the spatial light modulator 5, a relay optical system 7 that guides the laser light output from each of the laser light source devices 2-4 to the polarizing beam splitter 6, and a projection optical system 8 that projects the modulated laser light transmitted through the polarizing beam splitter 6 on the screen S.

The image display device 1 displays color images using a field sequential method. Thus, the laser light source devices 2-4 sequentially outputs laser light of respective colors in time division, and images formed by the laser light of each color is recognized as a color image due to residual images.

The relay optical system 7 includes collimator lenses 11-13 that convert the laser light of respective colors output from the laser light source devices 2-4 into collimated beams, first and second dichroic mirrors 14 and 15 that guide the laser light of colors transmitted through the collimator lenses 11-13 to a predetermined direction, a diffuser panel 16 that diffuses the laser light guided by the dichroic mirrors 14 and 15, and a field lens 17 that converts the laser light transmitted through the diffuser panel 16 into convergent laser.

Assuming that the direction in which the laser light is emitted from the projection optical system 8 to the screen S is a front side, the blue laser light source device 4 emits blue laser light rearwards. The green laser light source device 2 and the red laser light source device 3 emit green laser light and red laser light, respectively, such that the optical axis of each of the green laser light and the red laser light is orthogonal to the optical axis of blue laser light. The blue laser light, the red laser light and the green laser light are guided to a common optical path by the two dichroic mirrors 14 and 15. In other words, the first dichroic mirror 14 guides the blue laser light and the green laser light to the common light path, and the second dichroic mirror 15 guides the blue laser light, the green laser light and the red laser light to the common light path.

Each of the first and second dichroic mirrors 14 and 15 has surfaces, on each of which a film is provided to transmit or reflect laser light of a predetermined wavelength. The first dichroic mirror 14 transmits blue laser light and reflects the green laser light. The second dichroic mirror 15 transmits red laser light and reflects blue laser light and green laser light.

Each of these optical members is supported by a case 21. The case 21 serves as a heat dissipator that dissipates heat generated at each of the laser light source devices 2-4. The case 21 1 is made of a material having a high thermal conductivity, such as aluminum, copper, etc. Further, the spatial light modulator 5, the polarizing beam splitter 6, the relay optical system 7, the projection optical system 8, and so on, are attached to the case 21.

The green laser light source device 2 is attached to an attachment plate 22, which is provided on the case 21 to laterally extend from the body portion 21 a of the case 21. The attachment plate 22 extends from a corner portion where a front wall portion 23 and a side wall portion 24 intersect with each other, in a direction perpendicular to the side wall portion 24. The front wall portion 23 and the side wall portion 24 are positioned at the front and side, respectively, of a space accommodating the relay optical system 7. The attachment plate 22 thus serves as a heat sink. Thus, heat dissipation of the green laser light source device 2 is facilitated, and the heat is not easily conducted to the case 21. Therefore, a thermal influence of the green laser light source device 2 on the other laser light source devices can be reduced. The red laser light source device 3 is held by a holder 25 and is attached on an outer surface of the side wall portion 24. The blue laser light source device 4 is held by a holder 26 and is attached on an outer surface of the front wall portion 23.

Each of the red laser light source device 3 and the blue laser light source device 4 is made of a CAN package. Thus, a laser chip that outputs laser light is supported by a stem, and is positioned such that the optical axis is positioned on the central axis of the cylindrical exterior portion. Laser light is emitted from a glass window provided in an opening of the exterior portion. The red laser light source device 3 and the blue light source device 4 are pressed into attachment openings 27 and 28 in the holder 25 and 26, respectively, to be fixed to the holders 25 and 26. Heat generated by the blue laser light source device 4 and the red laser light source device 3 is conducted to the case 21 through the holders 25 and 26, and then is dissipated. Each of the holders 25 and 26 is made of a material having a high thermal conductivity, such as aluminum, copper, etc.

As shown in Fig. 1, the green laser light source device 2 includes a semiconductor laser 31, a FAC (Fast-Axis Collimator) lens 32, a rod lens 33, a laser medium 34, a wavelength conversion element 35, a concave mirror 36, a glass cover 37, a base 38 and a cover member 39. The semiconductor laser 31 outputs laser light for excitation (excitation laser light). The FAC lens 32 and the rod lens 33 serve as a collecting lens that collects the excitation laser light output from the semiconductor laser 31. The laser medium 34 is excited by the excitation laser light and outputs a fundamental laser light (infrared laser light). The wavelength conversion element 35 converts the wavelength of the fundamental laser light and outputs a half-wavelength laser light (green laser light). The concave mirror 36, together with the laser medium 34, serves as a resonator. The glass cover 37 prevents the excitation laser light and the fundamental wavelength laser light from leaking. The base 38 supports each of the above-described portions, and the cover member 39 covers each of the above-described portions.

The green laser light source device 2 is attached to the case 21 by fixing the base 38 to the attachment plate 22 with a plurality of fastening screws (not shown). As shown in Fig. 3, three screw holes 91 are formed in a front surface 38a of the base 38 of the green laser light source device 2. Further, through holes 92 are provided in the attachment plate 22 of the case 21 1 at positions respectively corresponding to the screw holes 91 in the base 38. A fastening screw is inserted in each through hole 92 and fitted into the screw hole 91. As shown in Fig. 1, the front surface 38a of the base 38 contacts the attachment surface 22a of the attachment board 22. Accordingly, heat transmission from the green laser light source device 2 to the attachment plate 22 is facilitated, and thus a heat dissipation effect is improved. Further, as shown in Fig. 3, the two guide pins 93 extending from the base 38 toward the attachment plate 22 are respectively inserted into two guide holes 94 provided in the attachment plate 22. This makes it easy to adjust the position of the green laser light source device 2 with respect to the attachment plate 22.

As shown in Fig. 1, a gap G1 with a desired width (e.g., equal to or less than 0.5 mm) is provided between the green laser light source device 2 and the side wall portion 24 of the case 21. By doing so, heat generated by the green laser light source device 2 is not easily transmitted to the red laser light source device 3. Thus, temperature rising of the red laser light source device 3 is reduced, and the red laser light source device 3, which has bad temperature characteristics, can operate stably. Further, to secure a desired adjustment allowance (e.g., about 0.3 mm) to adjust the optical axis of the red laser light source device 3, a gap G2 with a predetermined width (e.g., equal to or more than 0.3 mm) is provided between the green laser light source device 2 and the red laser light source device 3.

Further, in the red laser light source device 3 attached to the case 21, a front surface 25a of a holder 25 positioned on the red laser light output side contacts the side wall portion 24. As shown in Fig. 3, the diameter of the two through holes 96 for attachment provided in the holder 25 is slightly greater than the outer diameter of the shaft portion of the fixing bolt 97. Each fixing bolt 97 is inserted into the through hole 96 and is fitted into a bolt hole (not shown) provided in the side wall portion 24 of the case 21. According to this configuration, the attachment position of the holder 25 is adjustable in any appropriate direction (e.g., two axial directions of up and down and front and back) within a range allowed by a space formed between the shaft portion of the fixing bolt 97 and the through hole 96. As a result, the optical axis of the red laser light (i.e., the projection position with respect to the screen) can be displaced in any appropriate direction.

The blue laser light source device 4 has a configuration similar to the above-described red laser light source device 3. The fixing bolt 97 is inserted in a through hole (not shown) provided in the holder 26 and is fitted into a bolt hole 98 provided in the front wall surface 23 of the case 21. Accordingly, similar to the holder 25, the attachment position of the holder 26 is also adjustable in any appropriate direction. As a result, the optical axis of the blue laser light can be displaced in any appropriate direction.

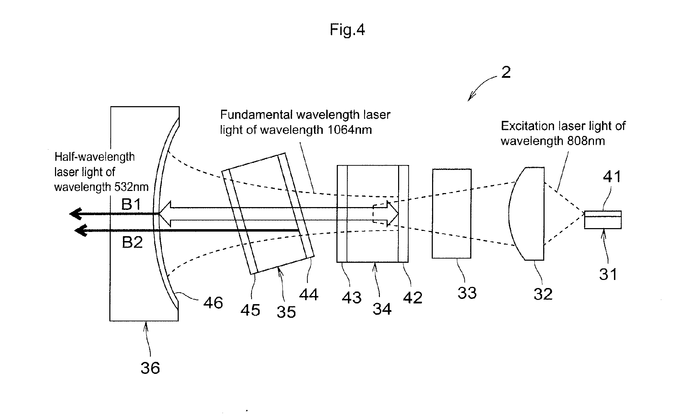

Fig. 4 is a schematic view illustrating a state of laser light in the green laser light source device 2. A laser chip 41 of the semiconductor laser 31 outputs excitation laser light having a wavelength of 808 nm. The FAC lens 32 reduces laser light spread in a fast axis (a direction perpendicular to the optical axis and parallel to the paper surface of the drawing). The rod lens 33 reduces laser light spread in a slow axis (a direction perpendicular to the paper surface of the drawing).

The laser medium 34 is a solid-state laser crystal, which is excited by the excitation laser light of wavelength 808 nm passing through the rod lens 33, and outputs fundamental wavelength laser light (infrared laser light) having a wavelength of 1064 nm. The laser medium 34 may be an inorganic optical active substance (crystal) made of YVO₄ (Y: yttrium and VO₄: vanadinite), doped with neodymium (Nd). More specifically, doping is performed by substituting Y of the base material YVO₄ by Nd⁺³, which is a phosphor material (an element that produces fluorescence).

A film 42 is provided on a side of the laser medium 34 facing the rod lens 33. The film 42 prevents reflection of the excitation laser light of wavelength 808 nm, and provides high reflection for the fundamental wavelength laser light of wavelength 1064nm and a half wavelength laser light of wavelength 532 nm. A film 43 is provided on a side of the laser medium 34 facing the wavelength conversion element 35. The film 43 prevents reflection of the fundamental wavelength laser light of wavelength 1064 nm and the half-wavelength laser light of wavelength 532 nm.

The wavelength conversion element 35 is a SHG (Second Harmonics Generation) element, which converts the fundamental wavelength laser light (infrared laser light) of wavelength 1064 nm output from the laser medium 34 and generates half-wavelength laser light (green laser light) of wavelength 532 nm. The wavelength conversion element 35 is a ferroelectric crystal having a periodically poled structure, in which polarization reversed regions and polarization non-reversed regions are alternately formed. The fundamental wavelength laser light is incident on the wavelength conversion element 35 in a periodic poling direction (a direction in which the periodically poled regions are arranged). LN (lithium niobate) doped with MgO may be used as the ferroelectric crystal.

A film 44 is provided on a side of the wavelength conversion element 35 facing the laser medium 34. The film 44 prevents reflection of the fundamental wavelength laser light of wavelength 1064 nm, and provides high reflection for the half-wavelength laser light of wavelength 532nm. A film 45 is provided on a side of the wavelength conversion element 35 facing the concave mirror 36. The film 45 prevents reflection of the fundamental wavelength laser light of wavelength 1064 nm and the half-wavelength laser light of wavelength 532 nm.

The concave mirror 36 has a concave surface on a side facing the wavelength conversion element 35. A film 46 is provided on the concave surface. The film 46 provides high reflection for the fundamental wavelength laser light of wavelength 1064 nm and the prevents reflection of the half wavelength laser light of wavelength 532 nm. Accordingly, the fundamental wavelength laser light of wavelength 1064 nm resonates between the film 42 of the laser medium 34 and the film 46 of the concave mirror 36, and is amplified.

The wavelength conversion element 35 converts a portion of the fundamental wavelength laser light of wavelength 1064 nm incident thereon from the laser medium 34 into the half-wavelength laser light of wavelength 532 nm. The fundamental wavelength laser light of wavelength 1064 nm that was not converted by and passes through the wavelength conversion element 35 is reflected by the concave mirror 36 and is incident on the wavelength conversion element 35 again to be converted into the half-wavelength laser light of wavelength 532 nm.
The half-wavelength laser light of wavelength 532 nm is reflected by the film 44 of the wavelength conversion element 35 and is output from the wavelength conversion element 35.

Under this condition, when beam B1 interferes with beam B2, the output power is reduced. The beam B1 is laser light that is incident on the wavelength conversion element 35 from the laser medium 34, is wavelength-converted by the wavelength conversion element 35, and is output from the wavelength conversion element 35. The beam B2 is laser light that is incident on the wavelength conversion element 35 after once reflected by the concave mirror 36, is reflected by the film 44 and is output from the wavelength conversion element 35. Therefore, the wavelength conversion element 35 is inclined with respect to the optical axis such that the laser light beams B1 and B2 do not interfere with each other due to the refraction function. Thus, the reduction in the output power can be prevented.

In addition, in order to prevent the excitation laser light of wavelength 808 nm and the fundamental wavelength laser light of 1064 nm from leaking to the exterior, a film that does not transmit the laser light having these wavelengths is provided on the glass cover 37.

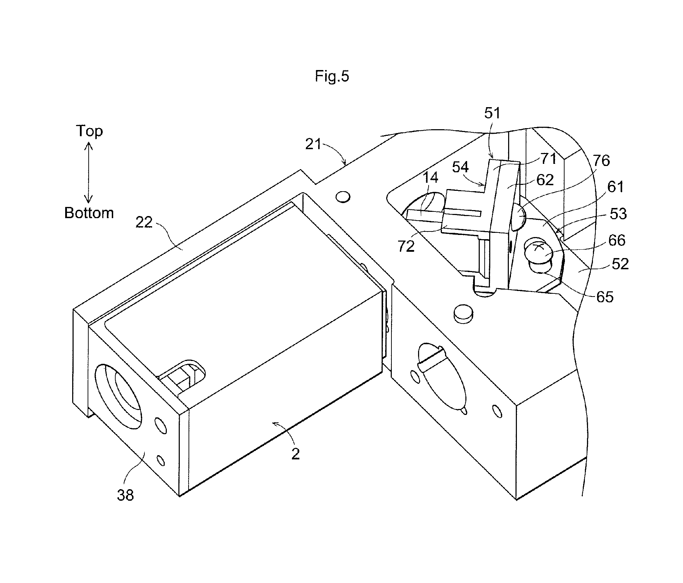

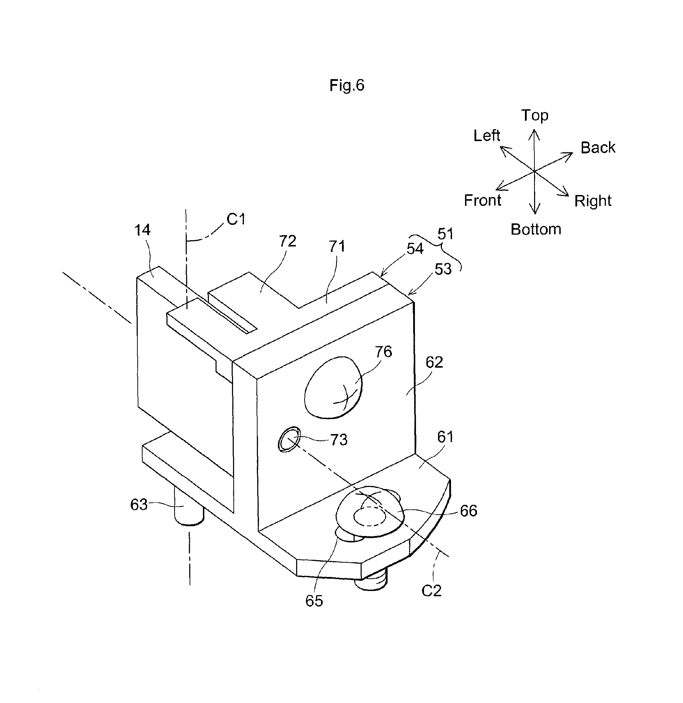

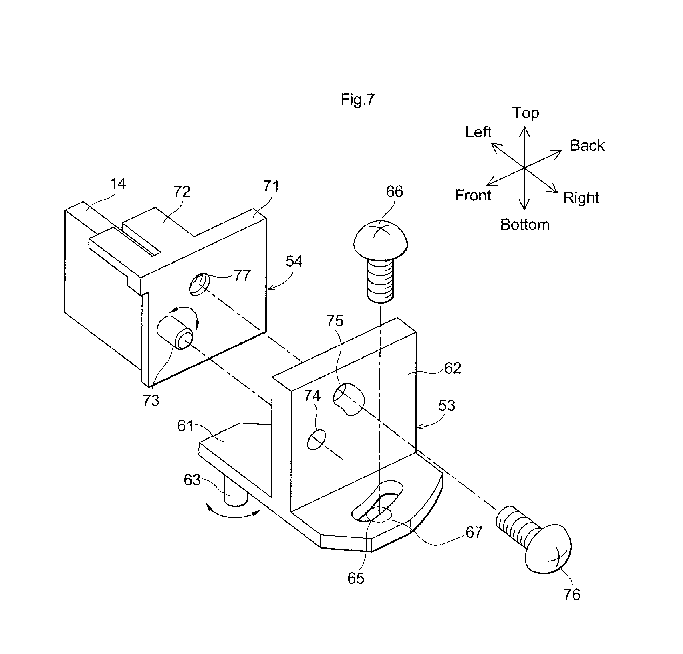

Fig. 5 is a perspective view illustrating the vicinity of the green laser light source device 2. Figs. 6 and 7 are a perspective view and an exploded perspective view of a mirror support device 51, respectively. In this embodiment, for the convenience of explanation, it is assumed that the thickness direction of the first dichroic mirror 14 is a front-back direction, the height direction (direction in which a first rotation shaft 63 extends) of the first dichroic mirror 14 is a vertical direction, and the width direction (direction in which a second rotation shaft 73 extends) of the dichroic mirror 14 is a right-left direction.

In Fig. 6, the mirror support device 51 that supports the first dichroic mirror 14 includes a first support member 53, which is movably attached to the bottom wall portion 52 of the case 21, and a second support member 54 movably attached to the first support member 53.

The first support member 53 includes a plate-shaped base portion 61, which is slidably positioned on an upper surface of the bottom wall portion 52, and a rectangular plate-shaped upright portion 62, which is provided to extend upwardly from the upper surface center portion of the base portion 61 (i.e., in a direction perpendicular to the base portion 61).

As shown in Figs. 6 and 7, the first rotation shaft 63 is provided at one portion of the two portions of the base portion 61 divided by the upright portion 62 as a border, such that the first rotation shaft 63 extends downwardly (i.e., in a direction perpendicular to the base portion 61) from the bottom surface of the base portion 61. The first rotation shaft 63 is inserted into a shaft hole (not shown) provided in an upper surface of the bottom wall portion 52. Thus, the first support member 53 is rotatable about the first rotation shaft 63. Further, an elongated opening 65 is provided in another portion of the two portions of the base portion 61 divided by the upright portion 62 as a border, such that the elongated opening 65 extends along a predetermined circular arc whose center is the first rotation shaft 63. A positioning adjustment screw 66 that fixes the first support member 53 to a predetermined rotation position is inserted into the elongated opening 65, and is fitted into a screw hole 67 provided in the upper surface of the bottom wall portion 52.

The second support member 54 has a generally rectangular plate-shaped body portion 71 that slidably overlaps a side surface of the upright portion 62 of the first support member 53. A mirror mounting portion 72, on which the first dichroic mirror 14 is mounted, is provided on the body portion 71 on the opposite side from the upright portion 62. The mirror mounting portion 72 supports a peripheral portion (portion at a right and upper edge, in this embodiment) of the first dichroic mirror 14, such that at least the reflection of the green laser at the reflection surface 14a (see Fig. 1) and the transmission of the blue laser at the incident surface 14b (see Fig. 1) are not interfered.

As shown in Fig. 7, the second rotation shaft 73 is provided on the body portion 71, so as to extend from the body portion 71 on a side facing the upright portion 62 of the first support member 53 in a direction perpendicular to the upright portion 62. The second rotation shaft 73 is inserted into a shaft hole 74 provided in the upright portion 62. Thus, the second support member 54 is rotatable about the second rotation shaft 73. Further, an elongated opening 75 is provided in the upright portion 62, such that the elongated opening 75 extends along a predetermined circular arc whose center is the second rotation shaft 73. A positioning adjustment screw 76, which fixes the second support member 54 to a desired rotational position, is inserted into the elongated opening 75, and is fitted into the screw hole 77 provided in a right side surface of the body portion 71.

The first dichroic mirror 14 has a rectangular plate shape, and is fixed to the second support member 54 so as to extend in a direction perpendicular to the base portion 61 of the first support member 53 and the body portion 71 of the second support member 54. As shown in Fig. 6, the first dichroic mirror 14 is located such that the center axis C1 of the first rotation shaft 63 penetrates the center in the front-back direction and the center in the right-left direction of the first dichroic mirror 14, and the center axis C2 of the second rotation shaft 73 penetrates the center of the front-back direction and the center of the vertical direction of the first dichroic mirror 14.

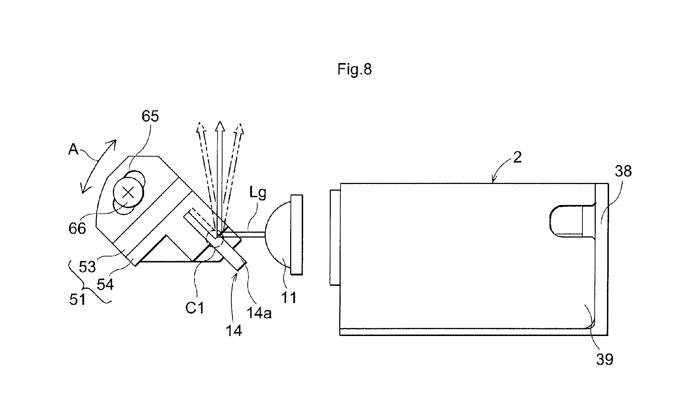

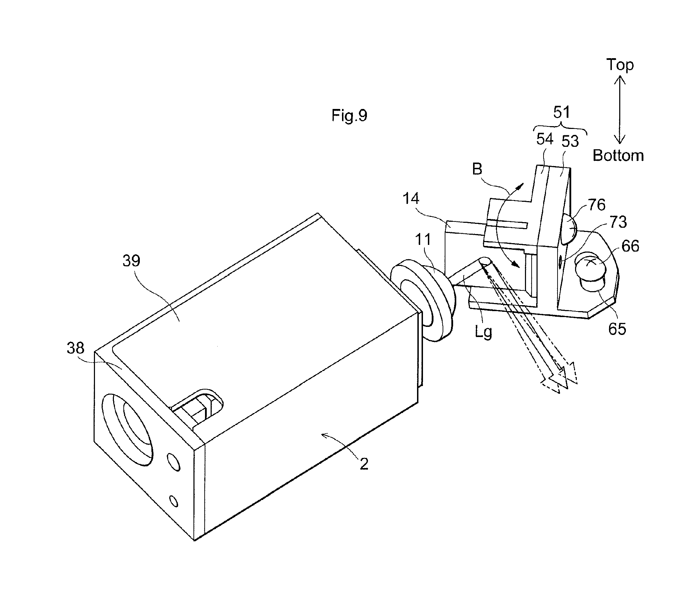

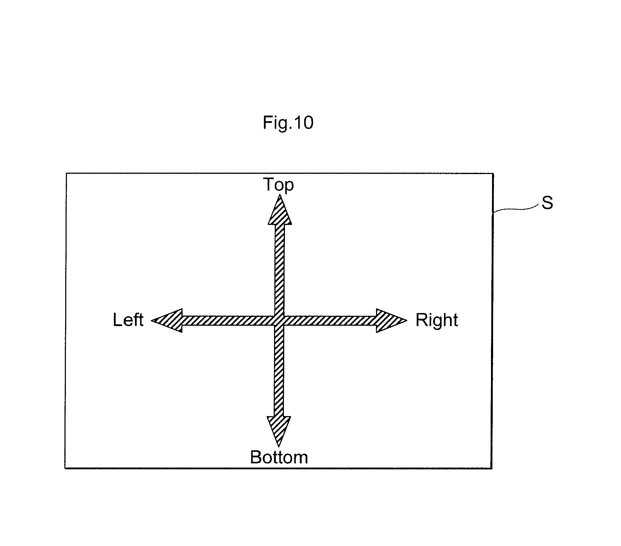

Figs. 8 and 9 are a plan view and a perspective view, respectively, illustrating an optical axis adjusting method of the green laser light by the mirror support device 51. Fig. 10 is an explanatory view illustrating change in the projection position of the green laser light on the screen S by the optical axis adjustment of the green laser light.

In the optical axis adjustment of the green laser light, the first support member 53 is rotated about the first rotation shaft 63 (as shown by arrow A of Fig. 8), while the position of the second support member 54 is fixed. This rotation operation is performed after the positioning adjustment screw 66 is once loosened. In this embodiment, the length of the elongated opening 65 in the longitudinal direction thereof is determined according to the rotation range necessary for adjusting the optical axis of the green laser light, to make the optical axis adjusting operation easy. The rotation of the first support member 53 is restricted by the shaft portion of the positioning adjustment screw 66 abutting one of the two ends of the elongated opening 65 in the longitudinal direction thereof.

By the rotation operation of the first support member 53, the angle of the reflection surface 14a of the first dichroic mirror 14 with respect to the optical axis of the green laser light changes. Accordingly, as indicated by a two-dot chain line in Fig. 8, the green laser light Lg output from the green laser light source device 2 changes the reflection direction (angle) in the horizontal direction (direction along the paper surface in Figs. 1 and 8). Due to the change in the reflection direction of the green laser light, the path of the green laser light (incident position, etc. of the green laser light on the spatial light modulator 5) changes. As a result, as shown in Fig. 10, the position of the green laser light on the screen S (in more detail, the position of an image based on the green laser light projected on the screen S) can be changed in the right-left direction (the direction along the paper surface of Fig. 1). According to the optical axis adjustment of the green laser light (in this embodiment, the adjustment of the rotation position of the first support member 53), the green laser light can be projected on an appropriate position in the right-left direction (ordinary, the center in the right-left direction) on the screen S.

Next, the second support member 54 is rotated about the second rotation shaft 73, as shown by an arrow B in Fig. 9. This rotation operation is performed while the positioning adjustment screw 76 is once loosened. In this embodiment, the length of the elongated opening 75 in the longitudinal direction thereof is determined according to the rotation range necessary for adjusting the optical axis of the green laser light, in order to make the optical axis adjustment operation easy. The rotation of the second support member 54 is restricted by the shaft portion of the positioning adjustment screw 76 abutting one of the two ends of the elongated opening 75 in the longitudinal direction thereof.

By the rotation operation of the second support member 54, the angle of the reflection surface 14a of the first dichroic mirror 14 with respect to the optical axis of the green laser light changes. Accordingly, as indicated by a two-dot chain line in Fig. 9, the green laser light Lg output from the green laser light source device 2 changes the reflection direction in the vertical direction (direction perpendicular to the paper surface in Fig. 1). Due to the change in the reflection direction of the green laser light, the path of the green laser light changes. As a result, as shown in Fig. 10, the position of the green laser light on the screen S can be changed in the vertical direction (the direction perpendicular to the paper surface of Fig. 1). According to the optical axis adjustment of the green laser light (in this embodiment, the adjustment of the rotation position of the second support member 54), the green laser light can be projected on an appropriate position in the vertical direction (ordinary, the center in the vertical direction) on the screen S.

As described above, according to the image display device of the embodiment, the first dichroic mirror 14 is rotated about the first rotation shaft 63 and the second rotation shaft 73 by the mirror support device 51, to change the reflection direction of the green laser light. Accordingly, unlike the red laser light source device 3 or the blue laser light source device 4, the green laser light source device 2 does not require adjustment of the attachment position to adjust the optical axis of the green laser light.

Additionally, the adjustment of the optical axis of the green laser light source device 2 as described above, should be performed at least before the adjustment of the optical axis of the blue laser light source device 4 (i.e., adjustment of the attachment position of the holder 26). This is to avoid the influence of the change in position of the first dichroic mirror 14 on the refracting angle of the blue laser light passing through the first dichroic mirror 14. Furthermore, the adjustment of the optical axis of the red laser light source device 3 (i.e., adjustment of the attachment position of the holder 25) may be performed before the adjustment of the optical axis of the green laser light source device 2, between the optical axis adjustment of the green laser light source device 2 and the optical axis adjustment of the blue laser light source device 4, or after the optical axis adjustment of the blue laser light source device 4.

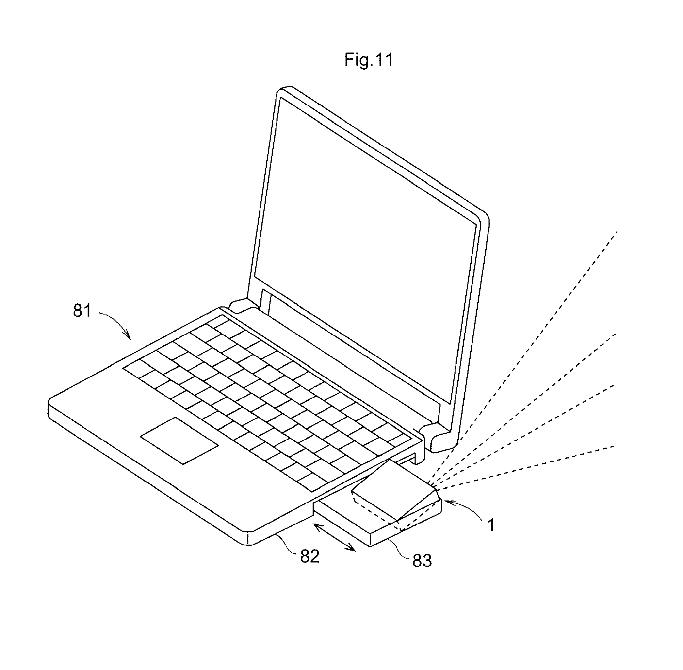

Fig. 11 is a perspective view illustrating an example of a notebook-type information processing device 81 in which the image display device 1 is provided. An accommodating space, in which the image display device 1 is ejectably and retractably accommodated, is provided in the case 82 of the information processing device 81 on a bottom surface side of a keyboard. The image display device 1 is accommodated (retracted) in the case 82, when it is not used. On the other hand, when the image display device 1 is used, it is pulled out or ejected from the case 82, and is rotated to be in a predetermined angle with respect to base portion 83, which rotatably supports the image display device 1. Thus, the laser light from the image display device 1 can be projected on a screen.

Further, in the above-described embodiment, the laser chip 41, the laser medium 34 and the wavelength conversion element 35 in the green laser light source device 2 output the excitation laser light of wavelength 808 nm, the fundamental wavelength laser light (infrared laser light) of wavelength 1064 nm, and the half-wave laser light (green laser light) of wavelength 532 nm, respectively. However, the present invention is not limited thereto. Instead, any laser light may be used as long as the laser light eventually output from the green laser light source device 2 is recognizable as green. For example, the laser light in a wavelength range in which the peak wavelength is between 500 nm and 560 nm may be output.

Next, an embodiment in which a part of the mirror support device 51 is modified will be described.

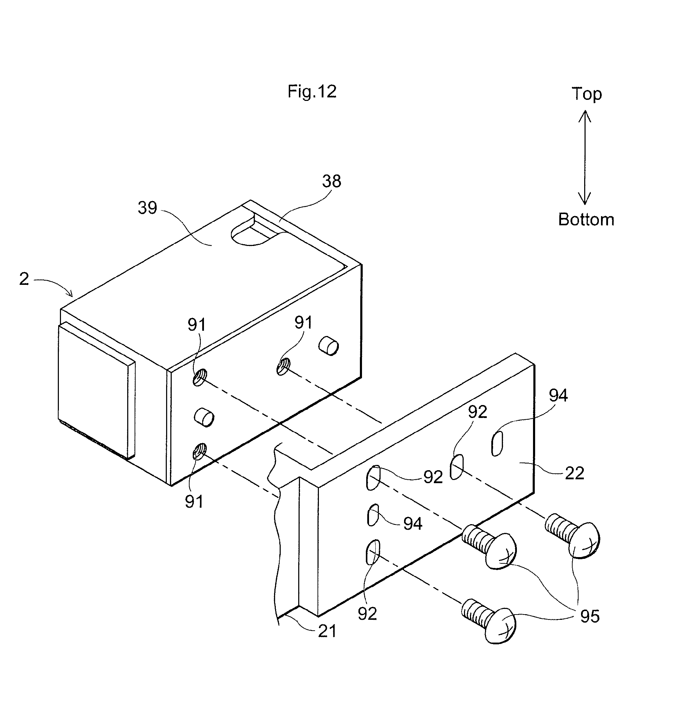

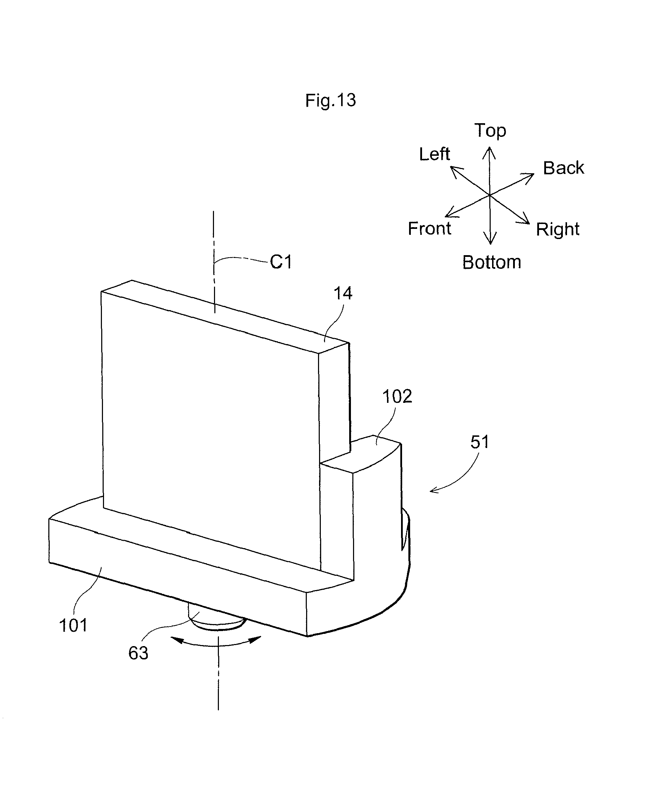

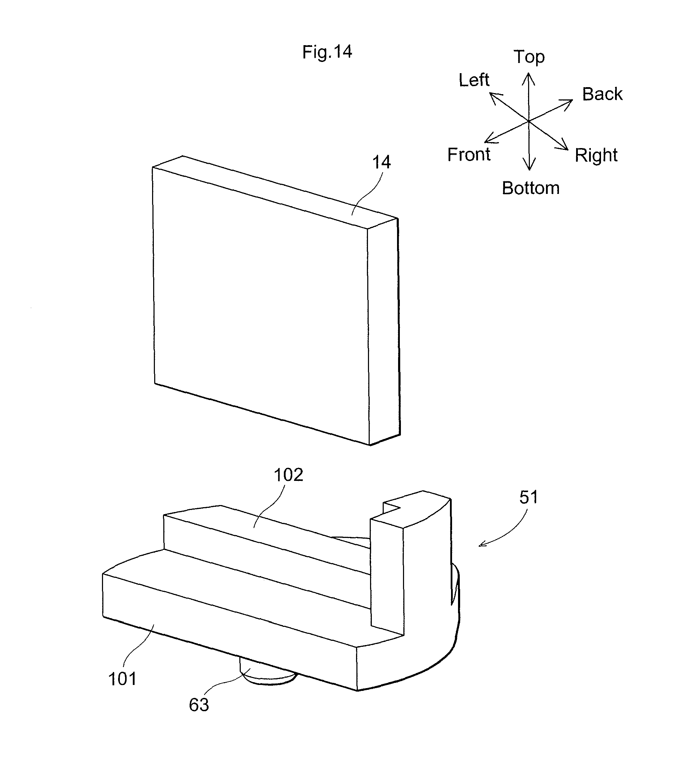

Fig. 12 is a perspective view illustrating an attachment structure of the green laser light source device 2 of the image display device 1 according to a second embodiment of the present invention. Figs. 13 and 14 are a perspective view and an exploded perspective view, respectively, of the mirror support device 51 according to the second embodiment. In Figs. 12-14, the elements similar to those in the first embodiment are denoted by the same reference numerals. In the following embodiment, the matters that are not particularly described are assumed to be similar to those in the first embodiment and the detailed description will be omitted.

As shown in Fig. 12, the through holes 92 are provided in the attachment plate 22 of the case 21 at positions corresponding to the respective screw holes 91 provided in the base 38. Each of the through holes 92 is an elongated opening extending at least in a direction (vertical direction in this embodiment) that is perpendicular to the optical axis of the green laser light emitted from the green laser light source device 2. The fastening screws 95 of the green laser light source device 2 are inserted into the respective through holes 92, and are fitted into the screw holes 91.

In the above-described configuration, the attachment position of the green laser light source device 2 is adjustable in a direction (vertical direction) within a range allowed by the space between the shaft portion of the fastening screw 95 and the through hole 92. As a result, the optical axis of the green laser light can be displaced in (in this embodiment, shifted in parallel to) the vertical direction (i.e., a first direction perpendicular to the paper surface of Fig. 1). As a result, it is possible to obtain the effect similar to the change in angle of the reflection surface 14a of the dichroic mirror 14 in the horizontal direction, as described with reference to Fig. 9. Accordingly, as described above with reference to Fig. 10, the position of the green laser light can be changed in the vertical direction on the screen S.

Further, as shown in Figs. 13 and 14, the mirror support device 51 that supports the first dichroic mirror 14 includes a plate-shaped base portion 101 and a mirror mounting portion 102. The base portion 101 is slidably positioned on the upper surface of the bottom wall portion of the case. The mirror mounting portion 102 extends upwardly from the center portion of the upper surface of the base portion 101.

The first rotation shaft 63 extends downwardly from the bottom portion of the base portion 101 in a direction perpendicular to the bottom surface of the bottom portion. The center axis C1 of the first rotation shaft 63 penetrates the center in the front-back direction and the center in the right-left direction of the first dichroic mirror 14. The first rotation shaft 63 is inserted into a shaft hole (not shown) provided in an upper surface of the bottom wall portion of the case. By doing so, the mirror support device 51 is rotatable about the first rotation shaft 63. Although it is not shown in Fig. 13, an elongated opening, similar to the above-described elongated opening 65 shown in Fig. 6 (see, the elongated opening 65 shown in Figs. 6 and 7), is provided in the base portion 101 behind the first dichroic mirror 14. Thus, it is possible to fix the mirror support device 51 to the case at an appropriate rotation position, by fastening the positioning adjustment screw similar to the positioning adjustment screw 66 shown in Fig. 6.

Since the reflection direction of the green laser light is changed by the rotation operation of the mirror support device 51, the optical axis of the green laser light can be displaced in the right-left direction (a second direction that extends along the paper surface of Fig. 1). As a result, it is possible to obtain an effect similar to the change in angle in the vertical direction of the reflection surface 14a of the dichroic mirror 14, as described above with respect to Fig. 8. Thus, as descried above with respect to Fig. 10, the green laser light can be displaced in the right-left direction on the screen S.

As described above, according to the image display device of the second embodiment, since the green laser light source device 2 is provided such that the position thereof is adjustable in an axial direction with respect to the case 21, and the first dichroic mirror 14 is rotatable about the first rotation shaft 63 by the mirror support device 51, the optical axis of the green laser light can be adjusted without employing a complicated attachment structure of the green laser light source device 2. Further, unlike the first embodiment, since the mirror support device 51 has a structure to rotate the first dichroic mirror 14 about an axis, it is not necessary to operate two positioning adjustment screws 66 and 67. Thus, there is an advantage that the adjustment operation is easy even in a narrow case 21.

The features of the present invention are described using specific embodiments above. However, these embodiments are merely examples, and the present invention is not limited to these embodiments. For example, in the above described embodiments, the first rotation axis and the second rotation axis of the mirror support device may extend in any appropriate directions as long as at least the optical axis of the green laser light is adjustable, as described above. Thus, the first rotation axis and the second rotation axis may not be perpendicular to each other. All the elements of the image display device according to the embodiments of the present invention as described above are not always necessary. Thus, it is possible to choose appropriately whether or not these elements are used, as long as at least it is not departed from the scope of the present invention.

(1) As described above, according to a first aspect of the present invention, the image display device does not require adjustment of the attachment position of the green laser light source device, or requires only very simple adjustment to make the optical axis of the green laser light adjustable easily. In other words, the first aspect of the present invention provides an image display device using a semiconductor laser as a light source, including: a green laser light source device that converts a wavelength of infrared laser light and outputs green laser light; a spatial light modulator that modulates the green laser light input from the green laser light source device based on an image signal; an optical element that is provided in a path between the green laser light source device and the spatial light modulator, and reflects the green laser light to direct the green laser light to the spatial light modulator; an optical element support device that supports the optical element; and a case to which the green laser light source device, the spatial light modulator and the optical element support device are attached. The optical element support device rotates about at least one rotation axis in a state of holding the optical element to displace an optical axis of the green laser light.

(2) Further, the optical element support device may be attached to a predetermined surface of the case, and may rotate about the at least one rotation axis to move the optical axis of the green laser light in a direction parallel to the predetermined surface of the case. With this configuration, the optical axis of the green laser light is easily adjustable in the direction parallel to the surface on which the optical element support device is attached, of the surfaces of the case.

(3) Further, the optical element support device may be attached to a predetermined surface of the case, and may rotate about a first rotation axis, which is perpendicular to the predetermined surface of the case, to displace the optical axis of the green laser light. With this configuration, the optical axis of the green laser light is easily adjustable in the direction parallel to the surface, on which the optical element support device is attached, of the surfaces of the case.

Further, the optical element support device may rotate the optical element about a first rotation axis and a second rotation axis, which intersect with each other, to change a reflection direction of the green laser light. With this configuration, the green optical axis is adjustable, without adjustment of an attachment position of the green laser light source device.

Further, the optical element support device may be attached to a predetermined surface of the case, the first rotation axis may be perpendicular to the predetermined surface of the case, and the second rotation axis may be in parallel with the predetermined surface of the case. With this configuration, the green optical axis is adjustable both in a direction perpendicular to and in a direction in parallel with the surface on which the optical element support device is attached, without requiring adjustment of the attachment position of the green laser light source device.

Further, the optical element support device may includes a first support member that is supported by the case rotatably about the first rotation axis; and a second support member that holds the optical element. The second support member, together with the optical element, is supported by the first support member rotatably about the second rotation axis. With this configuration, the green optical axis is adjustable both in the direction perpendicular to and the direction in parallel with the surface on which the optical element support device is attached, without requiring adjustment of an attachment position of the green laser light source device.

Further, the optical element support device may be attached to a predetermined surface of the case. The first support member may include a base member slidably positioned on the predetermined surface of the case; and an upright portion that extends upwardly from the base member. The second support member may include a body member that slidably overlaps a side surface of the upright portion. With this configuration, the green optical axis is easily adjustable both in the direction perpendicular to and in the direction in parallel with the surface on which the optical element support device is attached, without requiring adjustment of an attachment position of the green laser light source device.

Further, the base member may include a first portion and a second portion that are divided by the upright portion as a border. The first rotation axis may be provided on the first portion so as to extend downwardly from a bottom surface of the base member. The second potion may include an opening into which a screw is fitted. The opening has a shape of a circular arc whose center is the first rotation axis. Thus, the optical element support device rotates about the first rotation axis to displace the optical axis of the green laser light in a first direction. With this configuration, the optical axis of the green laser light is easily adjustable in a direction parallel to the surface on which the optical element support device is attached.

Further, the green laser light source device may be movable along a first axis with respect to the case, to displace the optical axis of the green laser light in a first direction. The optical element support device may rotate about a second axis in a state of holding the optical element to displace the optical axis of the green laser light in a second direction, which intersects with the first direction. With this configuration, the optical axis of the green laser light is adjustable, without employing complicated attachment structure of the green laser light source.

Further, the optical element support device may be attached to a predetermined surface of the case. The green laser light source device may be movable along the first axis with respect to the case, to displace the optical axis of the green laser light in a direction perpendicular to the predetermined surface of the case. The optical element support device may rotate about the second axis in a state of holding the optical element to displace the optical axis of the green laser light in the second direction which intersects with the direction perpendicular to the predetermined surface of the case. With this configuration, the green optical axis is adjustable in a direction perpendicular to and in a direction in parallel with the surface on which the optical element support device is attached, without employing a complicated attachment structure of the green laser light source.

Further, the case may includes a body portion that accommodates the spatial light modulator and the optical element support device; and an attachment portion that extends from the body portion. The green laser light source device may be attached to the attachment portion movably along the first axis. With this configuration, the optical axis of the green laser light becomes adjustable, while reducing an influence of heat generated by the green laser light source device on the surrounding area.

Further, the green laser light source device may be movable along the first axis with respect to the case, by an elongated opening provided in the attachment portion and extending in the direction of the first axis, and a screw inserted in the elongated opening, to displace the optical axis of the green laser light in the first direction. With this configuration, the optical axis of the green laser light is easily adjustable, while reducing an influence of heat generated by the green laser light source device on the surrounding area.

Further, the case may include a body portion that accommodates the spatial light modulator and the optical element support device; and an attachment portion that extends from the body portion. The green laser light source device may be attached to the attachment portion. With this configuration, the optical axis of the green laser light is easily adjustable, while reducing an influence of the heat generated by green laser light source device on the surrounding area.

Further, the green laser light source device may be attached to the attachment portion to be spaced from the body portion by a predetermined distance. With this configuration, the optical axis of the green laser light is easily adjustable, while reducing an influence of heat generated by the green laser light source device on the surrounding area.

According to a second aspect of the present invention, an image display device using a semiconductor laser as a light source is provided in which the optical axis of the green laser light is easily adjustable, without requiring the adjustment of the attachment position of the green laser light source device, or only with very simple adjustment thereof. Namely, the second aspect of the present invention provides an image display device including a green laser light source that converts a wavelength of infrared laser light and outputs green laser light; a laser light source device that outputs one of red laser light and blue laser light; a spatial light modulator that modulates the green laser light input from the green laser light source device based on an image signal; an optical element that is provided in a path between the green laser light source device and the spatial light modulator, the optical element reflecting the green laser light and transmitting the one of the red laser light and the blue laser light to direct the green laser light and the one of the red green laser light and the blue laser light to the spatial light modulator; an optical element support device that supports the optical element; and a case to which the green laser light source device, the spatial light modulator and the optical element support device are attached. The optical element support device rotates about at least one rotation axis in a state of holding the optical element to displace the optical axis of the green laser light

An information processing device according to a further aspect of the present invention includes an image display device that makes the optical axis of the green laser light to be easily adjustable, without requiring the adjustment of the attachment position of the green laser light source device, or only with very simple adjustment thereof. The further aspect of the present invention provides an information processing device includes the image display device according to the aspects of the present invention, and a case that accommodates the image display device such that the image display device is ejectable from and retractable into the case.

The image display device according to the features of the present invention makes the optical axis of the green laser light to be easily adjustable, without requiring adjustment of the attachment position of the green laser light source device, or only with a very simple adjustment thereof. Thus, the image display device is useful as an image display device having a laser light source device using a semiconductor laser as a light source.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the above described embodiments, and various variations and modifications may be possible without departing from the scope of the present invention.

## Claims

1. An image display device using a semiconductor laser as a light source, comprising:
a green laser light source device that converts a wavelength of infrared laser light and outputs green laser light;
a spatial light modulator that modulates the green laser light input from the green laser light source device based on an image signal;
an optical element that is provided in a path between the green laser light source device and the spatial light modulator, and reflects the green laser light to direct the green laser light to the spatial light modulator;
an optical element support device that supports the optical element; and
a case to which the green laser light source device, the spatial light modulator and the optical element support device are attached,
wherein the optical element support device rotates about at least one rotation axis in a state of holding the optical element to displace an optical axis of the green laser light.

2. The image display device according to claim 1, wherein the optical element support device is attached to a predetermined surface of the case, and rotates about the at least one rotation axis to move the optical axis of the green laser light in a direction parallel to the predetermined surface of the case.

3. The image display device according to claim 1, wherein the optical element support device is attached to a predetermined surface of the case, and rotates about a first rotation axis, which is perpendicular to the predetermined surface of the case, to displace the optical axis of the green laser light.

4. The image display apparatus according to claim 1, wherein the optical element support device rotates the optical element about a first rotation axis and a second rotation axis, which intersect with each other, to change a reflection direction of the green laser light.

5. The image display apparatus according to claim 4, wherein the optical element support device is attached to a predetermined surface of the case,
the first rotation axis is perpendicular to the predetermined surface of the case, and
the second rotation axis is in parallel with the predetermined surface of the case.

6. The image display device according to claim 4, wherein the optical element support device comprises:
a first support member that is supported by the case rotatably about the first rotation axis; and
a second support member that holds the optical element, the second support member, together with the optical element, being supported by the first support member rotatably about the second rotation axis.

7. The image display device according to claim 6, wherein the optical element support device is attached to a predetermined surface of the case,
the first support member includes:
a base member slidably positioned on the predetermined surface of the case; and
an upright portion that extends upwardly from the base member, and
the second support member includes a body member that slidably overlaps a side surface of the upright portion.

8. The image display device according to claim 7, wherein the base member includes a first portion and a second portion that are divided by the upright portion as a border,
the first rotation axis is provided on the first portion so as to extend downwardly from a bottom surface of the base member,
the second potion includes an opening into which a screw is fitted, the opening having a shape of a circular arc whose center is the first rotation axis, and
whereby the optical element support device rotates about the first rotation axis to displace the optical axis of the green laser light in a first direction.

9. The image display device according to claim 1, wherein the green laser light source device is movable along a first axis with respect to the case, to displace the optical axis of the green laser light in a first direction, and
the optical element support device rotates about a second axis in a state of holding the optical element to displace the optical axis of the green laser light in a second direction, which intersects with the first direction.

10. The image display device according to claim 9, wherein the optical element support device is attached to a predetermined surface of the case,
the green laser light source device is movable along the first axis with respect to the case to displace the optical axis of the green laser light in a direction perpendicular to the predetermined surface of the case, and
the optical element support device rotates about the second axis in a state of holding the optical element to displace the optical axis of the green laser light in the second direction which intersects with the direction perpendicular to the predetermined surface of the case.

11. The image display device according to claim 9, wherein the case comprises:
a body portion that accommodates the spatial light modulator and the optical element support device; and
an attachment portion that extends from the body portion, the green laser light source device being attached to the attachment portion movably along the first axis.

12. The image display device according to claim 11, wherein the green laser light source device is movable along the first axis with respect to the case, by an elongated opening provided in the attachment portion and extending in the direction of the first axis, and a screw inserted in the elongated opening, to displace the optical axis of the green laser light in the first direction.

13. The image display device according to claim 1, wherein the case comprises:
a body portion that accommodates the spatial light modulator and the optical element support device; and
an attachment portion that extends from the body portion, the green laser light source device being attached to the attachment portion.

14. The image display device according to claim 13, wherein the green laser light source device is attached to the attachment portion to be spaced from the body portion by a predetermined distance.

15. An image display device using a semiconductor laser as a light source, comprising:
a green laser light source that converts a wavelength of infrared laser light and outputs green laser light;
a laser light source device that outputs one of red laser light and blue laser light;
a spatial light modulator that modulates the green laser light input from the green laser light source device based on an image signal;
an optical element that is provided in a path between the green laser light source device and the spatial light modulator, the optical element reflecting the green laser light and transmitting the one of the red laser light and the blue laser light, to direct the green laser light and the one of the red green laser light and the blue laser light to the spatial light modulator;
an optical element support device that supports the optical element; and
a case to which the green laser light source device, the spatial light modulator and the optical element support device are attached,
wherein the optical element support device rotates about at least one rotation axis in a state of holding the optical element to displace the optical axis of the green laser light.

16. An information processing device, comprising:
the image display device according to claim 1;
a case that accommodates the image display device such that the image display device is ejectable from and retractable into the case.
